## Europäisches Patentamt
## European Patent Office
## Office européen des brevets

(11) Veröffentlichungsnummer: **0 114 971**
**B1**

(12) **EUROPÄISCHE PATENTSCHRIFT**

(45) Veröffentlichungstag der Patentschrift: **23.03.88**

(21) Anmeldenummer: **83111888.0**

(22) Anmeldetag: **28.11.83**

(51) Int. Cl.⁴: **B 29 C 53/56** // B29K77/00

(54) Verfahren zur Herstellung von Formkörpern aus faserverstärktem Polyamid.

(30) Priorität: **04.12.82 DE 3244984**

(43) Veröffentlichungstag der Anmeldung:
**08.08.84 Patentblatt 84/32**

(45) Bekanntmachung des Hinweises auf die
Patenterteilung:
**23.03.88 Patentblatt 88/12**

(84) Benannte Vertragsstaaten:
**BE DE FR GB IT NL**

(56) Entgegenhaltungen:
DE-A-1 900 541
FR-A-1 226 691
FR-A-2 306 821

(73) Patentinhaber: **BASF Aktiengesellschaft
Carl-Bosch-Strasse 38
D-6700 Ludwigshafen (DE)**

(72) Erfinder: **Horn, Peter, Dr.
Neue Stuecker 15
D-6900 Heidelberg (DE)**
Erfinder: **Roeber, Artur
Dackenheimer Strasse 6
D-6700 Ludwigshafen (DE)**
Erfinder: **Marx, Matthias, Dr.
Seebacher Strasse 49
D-6702 Bad Duerkheim (DE)**
Erfinder: **Seiler, Erhard, Dr.
Erpolzheimer Strasse 1
D-6700 Ludwigshafen (DE)**
Erfinder: **Nissen, Dietmar, Dr.
Ziegelhaeuser Landstrasse 31
D-6900 Heidelberg (DE)**
Erfinder: **Heym, Manfred, Dr.
Bachweg 6
D-6719 Weisenheim (DE)**
Erfinder: **Fischer, Juergen, Dr.
Thomas-Mann-Strasse 62
D-6700 Ludwigshafen (DE)**

Courier Press, Leamington Spa, England.

**Beschreibung**

Die Erfindung betrifft ein Verfahren zur Herstellung von Formkörpern aus faserverstärktem Polyamid durch alkalische Lactampolymerisation in Gegenwart von Endlosfaserrovings.

Formkörper aus faserverstärktem Polyamid wurden bisher durch Extrusion von faserhaltigen Polyamiden hergestellt. Dies ist jedoch wegen der hohen Viskosität des Kunststoffs ein recht aufwendiges Verfahren; außerdem können dabei nur Kurzfasern als Verstärkungsmittel eingesetzt werden, so daß Formkörper mit sehr hoher Festigkeit nicht hergestellt werden können.

Die Herstellung von Polyamid-Formkörpern durch aktivierte alkalische Lactampolymerisation ist bekannt. Sie ist beispielsweise im Kunststoff-Handbuch, Band VI, Polyamide, Carl-Hanser-Verlag 1966, Seiten 46 bis 49 ausführlich beschrieben. Es ist auch bekannt, die alkalische Lactampolymerisation in Gegenwart von Verstärkungsfasern durchzuführen, siehe z.B. DE—A 1 803 647, 2 249 189 und 2 817 778. Bei den dort beschriebenen Verfahren muß peinlich darauf geachtet werden, daß das Lactam nicht mit Feuchtigkeit und Luftsauerstoff in Berührung kommt, d.h. es muß unter Inertgas gearbeitet werden, was natürlich ein Arbeiten in technischem Maßstab erheblich erschwert. Nach der DE—A 1 900 541 werden Endlosfasern mit Lactam getränkt, das Lactam wird bei Temperaturen zwischen 200 und 280°C polymerisiert und die erhaltenen Stränge werden granuliert. Hierbei werden spezielle Katalysatoren mit geringer Aktivität, z.B. Alkali- und Erdalkali-Salze von Carbonsäure, eingesetzt, was offenbar zur Folge hat, daß die Gegenwart von Feuchtigkeit und Luft nicht mehr stört.

Bei den dabei notwendigen hohen Temperaturen bilden sich jedoch während der Polymerisation örtlich Vernetzungsstellen mit erhöhtem Gelgehalt, wodurch die mechanischen Eigenschaften der Formkörper verschlechtert werden. Versucht man deshalb bei niedrigeren Temperaturen zu arbeiten, dann ergeben die hier empfohlenen wenig aktiven Katalysatoren verhältnismäßig lange Polymerisationszeiten.

Der Erfindung lag nun die Aufgabe zugrunde, ein einfaches und auch in technischem Maßstab ohne großen Aufwand durchführbares Verfahren zur Herstellung von Polyamid-Formkörpern mit guten mechanischen Eigenschaften, insbesondere hoher Festigkeit, Steifigkeit und Zähigkeit zu entwickeln.

Es wurde gefunden, daß diese Aufgabe durch die beiden, in den Patentansprüchen 1 und 4 angegebenen verfahren gelöst wird, d.h. die Formkörper werden nach dem Wickelverfahren hergestellt und dabei die aktivierte alkalische Lactampolymerisation angewendet.

Bevorzugtes Lactam ist ε-Caprolactam, daneben können auch Caprylactam, Laurinlactam sowie die entsprechenden alkylsubstituierten Lactame eingesetzt werden.

Die Polyamid-Formkörper werden nach den bekannten Verfahren der aktivierten alkalischen Lactampolymerisation hergestellt. Dabei geht man von zwei Komponenten A und B aus. Komponente A stellt eine Lactam-Schmelze dar, die einen hochreaktiven Katalysator enthält, Komponente B ist eine Lactam-Schmelze, die einen Aktivator enthält. Die Komponenten A und B werden kurz vor dem Tränken des Endlosfaserrovings zusammengegeben.

Geeignete hochreaktive Katalysatoren sind z.B. Alkalilactamate, insbesondere Natrium-ε-Caprolactamat, sowie Alkalihydride und Grignardverbindungen, wie z.B. Caprolactammagnesiumbromid, Methylmagnesiumchlorid, Methylmagnesiumbromid.

Die Katalysatoren werden üblicherweise in Mengen von 0,1 bis 10 Mol.%, bezogen auf Gesamt-Lactam, eingesetzt. Als Aktivatoren kommen in Frage: N-Acyllactame, wie N-Acetylcaprolactam, Bisacyllactame, Carbonyllactame, substituierte Triazine, Carbodiimide, Cyanimide, Mono- und Polyisocyanate, sowie maskierte Isocyanatverbindungen. Sie werden bevorzugt in Mengen von 0,1 bis 10 Mol.% eingesetzt.

Die Schlagzähigkeit der Formmassen kann durch übliche Zusätze, wie Polyalkylenglykole mit Molekulargewichten von 2000 bis 100 000 erhöht werden, ferner durch Zusatz von reaktiven oder nicht reaktiven Kautschuken.

Die Polymerisation des Lactams kann in Gegenwart üblicher Stabilisatoren durchgeführt werden. Besonders vorteilhaft ist eine Kombination von CuI und KI im Molverhältnis 1:3, die in Mengen von 50 bis 100 ppm Kupfer, bezogen auf Gesamtlactam, der aktivatorhaltigen Komponente B zugesetzt wird. Weitere geeignete Stabilisatoren sind Kryptophenole und Amine.

Der aktivatorhaltigen Komponente B können ferner Keimbildner, wie Talkum oder Polyamid-2,2 in Mengen von bis zu 2 Gew.%, gegebenenfalls zusammen mit Peroxiden, zugesetzt werden.

Weitere übliche Zusätze sind Regler, Pigmente, z.B. Ruß, Farbstoffe, Weichmascher, Füllstoffe, z.B. Wollastonit oder Kreide, Flammschutzmittel, z.B. roter Phosphor und Treibmittel.

Erfindungsgemäß wird nach dem Wickelverfahren gearbeitet. Dieses ist an sich bekannt und z.B. in Kunststoffe *71* (1981), Heft 10, Seiten 740 bis 742 beschrieben.

Als Endlosfaserrovings werden dabei vorzugsweise solche aus Glas, Kohlenstoff oder aus aromatischen Polyamiden eingesetzt, wobei die Rovings einzeln oder in Form von Bändern aus mehreren nebeneinander angeordneten Rovings auf den Dorn in ein oder mehreren Lagen abgelegt werden. Das Volumenverhältnis Faser zu Lactam liegt zwischen 30:70 und 70:30.

Bei dem erfindungsgemäßen Verfahren werden Endlosfaserrovings um einen Dorn gewickelt, vor oder nach dem Wickeln mit einer Katalysator und Aktivator enthaltenden Lactamschmelze getränkt, und das Lactam wird durch Erhitzen auf maximal 210°C polymerisiert.

Das gebräuchliche Verfahren ist das Naßwickeln, bei dem die Endlosfaserrovings erst durch ein Tränkbad geführt und dann um einen Dorn gewickelt werden. Bei einer bevorzugten Ausführungsform werden die getränkten Rovings unmittelbar vor dem Wickeln 10 bis 100, vorzugsweise 15 bis 30 sec lang bei 180 bis 280°C behandelt, wobei durch Anpolymerisieren des Lactams die Viskosität erhöht wird. Dies geschieht zweckmäßigerweise dadurch, daß man die Stränge durch ein Rohr führt, in welches heiße Luft eingeblasen wird. Durch diese Maßnahme wird es möglich, die Wickelgeschwindigkeit auf über 10, vorzugsweise 15 bis 50 m/min zu erhöhen.

Man kann die Rovings aber auch trocken um den Dorn wickeln und erst dort mit der Lactamschmelze tränken. Dies kann durch Aufgießen oder Aufspritzen aus einer Breitschlitzdüse geschehen; man kann aber auch den Wickelkörper ganz mit einer Form umhüllen und das Lactam in die Form, d.h. in den faserhaltigen Raum zwischen Wickelkern und Forminnenwand injizieren. Diese Arbeitsweise hat den Vorteil, daß man durch vorheriges Evakuieren der Form jegliche Lufteinschlüsse aus dem Lactam entfernen kann.

Alternativ kann man auch die Endlosfaserrovings mit einer Katalysator und Aktivator enthaltenden Lactamschmelze tränken, das Lactam durch Erhitzen auf maximal 210°C polymerisieren, die erhaltenen Halbzeugstränge um einen Dorn wickeln und auf eine Temperatur erhitzen, die 5 bis 70°C, vorzugsweise 10 bis 50°C über dem Schmelzpunkt des Polyamids liegt. Es ist günstig, die aufgewickelten Halbzeugstränge vor dem Abwickeln und Weiterverarbeiten auf eine Temperatur von 5 bis 50°C unter dem Schmelzpunkt des Polyamids zu erwärmen, um ein Brechen der Stränge zu vermeiden. Auch dabei erhält man Formkörper aus faserverstärktem Polyamid, man hat hier den Vorteil, daß man die als Zwischenprodukt erhaltenen Halbzeugstränge lagern und erste bei Bedarf zum Fertigteil weiterverarbeiten kann. Bei die Weiterverarbeitung macht man von den thermoplastischen Eigenschaften des Polyamids Gebrauch, indem man es aufschmilzt und so die dicht gewickelten Halbzeugstränge zu einem Formkörper verbindet. Die Energiezufuhr kann dadurch geschehen, daß man auf einen erhitzten Dorn wickelt, die Halbzeugstränge vorerhitzt, den Wickelkörper durch energiereiche Strahlen erwärmt oder eine Kombination von zwei oder allen dreien dieser Maßnahmen anwendet.

Bei allen geschilderten Verfahrensvarianten ist es vorteilhaft, daß das Lactam während des Tränkvorgangs eine Temperatur zwischen 70 und 140°C, vorzugsweise zwischen 90 und 130°C, aufweist. Um zu verhindern, daß beim Kontakt zwischen Rovings und Lactam die Lactamtemperatur zu stark absinkt und damit die Polymerisationsgeschwindigkeit zu langsam wird, sollten die Rovings vor dem Tränken vorerhitzt werden, zweckmäßigerweise auf Temperaturen oberhalb von 100°C, insbesondere auf 130 bis 180°C.

Führt man den Tränkvorgang bei zu hohen Temperaturen durch, dann besteht die Gefahr, daß die Polymerisation des Lactams bereits an dieser Stelle einsetzt.

Bei der Polymerisation darf eine Temperatur von 210°C nicht überschritten werden, da sonst Gelbildung eintreten kann, was zu Inhomogenitäten im Formkörper und damit zu verschlechterten mechanischen Eigenschaften führt. Vorzugsweise arbeitet man bei Temperaturen zwischen 160 und 200°C, wobei durch geeignete Auswahl von Art und Konzentration des Katalysators und Aktivators die Polymerisationsdauer auf einen Zeitraum von weniger als 10, vorzugsweise von weniger als 5 min eingestellt werden sollte.

Nach dem erfindungsgemäßen Verfahren können rotationssymmetrische Hohlkörper, wie z.B. Rohre, Behälter und Behälterteile hergestellt werden, bei Verwendung konisch oder vieleckig geformter Dorne lassen sich auch Hohlkörper mit komplizierter Geometrie herstellen. Man kann die Hohlkörper auch aufschneiden und auf diese Weise Halbschalen oder Federkörper herstellen.

Die in den Beispielen genannten Teile und Prozente beziehen sich auf das Gewicht.

### Beispiel 1a
Herstellung eines Rohres für hohe Torsionslasten

Lactamkomponente A:
100 Teile -Caprolactam
 20 Teile einer Mischung aus 83,5 % ε-Caprolactam und 16,5 % einer 15 %igen Lösung von Hexamethylendiisocyanat in Caprolactam

Lactamkomponente B:
100 Teile ε-Caprolactam
 14 Teile einer 17,5 %igen Lösung von Natriumlactamat in Caprolactam.

Die beiden Lactamkomponenten wurden auf 125°C gebracht und im Verhältnis 1:1 zusammengegeben. Anschließend wurde mit dieser Schmelze ein auf 170°C vorgeheizter Roving (mit 6000 Filamenten) aus hochfesten Kohlenstoff-Fasern auf Basis von Polyacrylnitril mit einer Geschwindigkeit von 10 m.min⁻¹ so getränkt, daß sich ein Volumenverhältnis Faser:Lactam von 60:40 einstellte. Dieser Roving wurde unmittelbar anschließend auf einen zylindrischen Dorn mit einer Länge von 40 cm und einem Durchmesser von 5 cm, der durch Innenheizung auf 190°C erhitzt war, aufgewickelt. Es wurden 4 Lagen unter Winkeln von 90°, +45°, −45° und 90° zur Dornlängsachse gewickelt. 3 min nach dem Aufbringen der letzten Lage wurde abgekühlt und entformt.

### Beispiel 1b
Beispiel 1a wurde wiederholt, wobei jedoch der getränkte Roving vor dem Wickeln durch ein Heizrohr, in welches 250°C heiße Luft eingeblasen wird, geführt wurde. Die Verweilzeit betrug ca. 15 sec. Dabei wurde das Lactam anpolymerisiert, wodurch die Fadengeschwindigkeit auf 20 m.min⁻¹ erhöht werden konnte.

### Beispiel 2

Herstellung eines Druckbehälters mit zylindrischem Mittelteil und halbkugelförmigen Kappen

Es wurden die gleichen Lactamkomponenten wie in Beispiel 1 verwendet.

Ein Roving (790 tex) aus Aramidfasern wurde in 8 Lagen um einen zylindrischen Dorn mit einer Länge von 40 cm und einem Durchmesser von 15 cm mit einer Geschwindigkeit von 50 m.min⁻¹ gewickelt. Die Glasfaserschicht wurde durch Strahler auf eine Temperatur von 120°C aufgeheizt. Nach dem Bewickeln wurde auf den noch drehenden Dorn der 125°C heiße Lactamansatz mit Hilfe eines Gießers aus einer Breitschlitzdüse aufgebracht. Das Lactam tränkte den Wickelkörper, der Überschuß wurde so abgestreift, daß sich ein Volumenverhältnis Faser:Lactam von 50:50 einstellte. Danach wurde durch zusätzliche IR-Strahler auf 180°C erhitzt, um die Polymerisation einzuleiten. 4 min nach Erreichen der Polymerisationstemperatur wurde abgekühlt.

### Beispiel 3

Herstellung von unidirektionalen Blattfederelementen

Es wurde die gleiche Lactamkomponente wie in Beispiel 1 verwendet.

Ein Roving (2400 tex) aus E-Glasfasern, der mit einer handelsüblichen Schlichte (OCF P 274) behandelt war, wurde auf 160°C vorerhitzt und zur Tränkung mit einer Geschwindigkeit von 5 m/min durch eine Düse gezogen, die mit der auf 125°C erwärmten Polymerisationsmischung beschickt wurde. Unmittelbar hinter der Düse wurde der getränkte Roving durch einen auf 200°C erhitzten Ofen geführt, in dem die Polymerisation des Lactams innerhalb von 2 min ablief. Anschließend wurde der so hergestellte Halbzeugroving aufgespult.

In einem zweiten Arbeitsgang wurde die Spule auf 200°C erwärmt, der Halbzeugroving abgewickelt und in einem Vorheizrohr auf 200°C erhitzt und unter einer Zugspannung von 50 N mit einer Geschwindigkeit von 1,7 m/min auf einen zylindrischen Dorn mit 20 cm Länge und 100 cm Durchmesser, der auf 230°C erhitzt war, gewickelt. Dabei verbinden sich die Halbzeugrovings zu einem Ring, der nach Abkühlen und Zerschneiden in Segmente zu den gewünschten Blattfederelementen führt.

### Patentansprüche

1. Verfahren zur Herstellung von Formkörpern aus faserverstärktem Polyamid durch alkalische Lactam-Polymerisation in Gegenwart von Verstärkungsfasern, dadurch gekennzeichnet, daß man Endlosfaserrovings um einen Dorn wickelt, vor oder nach dem Wickeln mit einer einen hochreaktiven Katalysator und einen Aktivator enthaltenden Lactamschmelze tränkt und das Lactam durch Erhitzen auf Temperaturen von maximal 210°C polymerisiert.

2. Verfahren nach Anspruch 1, dadurch gekennzeichnet, daß man Endlosfaserrovings mit einer Lactamschmelze tränkt, durch Anpolymerisieren die Viskosität des Lactams erhöht und unmittelbar anschließend den Roving um einen Dorn wickelt.

3. Verfahren nach Anspruch 2, dadurch gekennzeichnet, daß man den getränkten Roving 10 bis 100 sec lang bei 180 bis 280°C behandelt.

4. Verfahren zur Herstellung von Formkörpern aus faserverstärktem Polyamid durch alkalische Lactam-Polymerisation in Gegenwart von Verstärkungsfasern, dadurch gekennzeichnet, daß man Endlosfaserrovings mit einer einen hochreaktiven Katalysator und einen Aktivator enthaltenden Lactamschmelze tränkt, das Lactam durch Erhitzen auf Temperaturen von maximal 210°C polymerisiert, die Halbzeugstränge um einen Dorn wickelt und auf eine Temperatur erhitzt, die 5 bis 70°C über dem Schmelzpunkt des Polyamids liegt.

5. Verfahren nach Anspruch 1 und 4, dadurch gekennzeichnet, daß die Fasern aus Glas, Kohlenstoff oder aromatischem Polyamid bestehen.

6. Verfahren nach Anspruch 1 und 4, dadurch gekennzeichnet, daß das Lactam Caprolactam, alkylsubstituiertes Caprolactam, Capryllactam oder Laurinlactam ist.

7. Verfahren nach Anspruch 1 und 4, dadurch gekennzeichnet, daß das Volumenverhältnis Faser zu Lactam zwischen 30:70 und 70:30 liegt.

8. Verfahren nach Anspruch 1 und 4, dadurch gekennzeichnet, daß als hochreaktive Katalysatoren Alkalilactamate, Grignard-Verbindungen oder Alkalihydride eingesetzt werden.

9. Verfahren nach Anspruch 1 und 4, dadurch gekennzeichnet, daß als Aktivatoren Isocyanate, verkappte Isocyanate, Carbodiimide, Acyllactame, Bisacyllactame oder Carbonyllactame verwendet werden.

10. Verfahren nach Anspruch 1 und 4, dadurch gekennzeichnet, daß das Lactam während des Tränkvorgangs eine Temperatur zwischen 70 und 140°C aufweist.

11. Verfahren nach Anspruch 1 und 4, dadurch gekennzeichnet, daß das Lactam bei Temperaturen zwischen 160 und 200°C polymerisiert wird und die Polymerisation höchstens 10 min dauert.

### Revendications

1. Procédé de production d'éléments façonnés en un polyamide renforcé par des fibres par une polymérisation alcaline d'une lactame en présence de fibres de renforcement, caractérisé en ce que l'on enroule sur un manchon du stratifil sans fin, qui est imprégné, avant ou après l'enroulement, avec une lactame fondue, contenant un catalyseur fortement actif et un activateur, qui est ensuite polymérisée par un chauffage à des températures ne dépassant pas 210°C.

2. Procédé suivant la revendication 1, caractérisé en ce que l'on imprègne le stratifil sans fin d'une lactame fondue, dont la viscosité est accrue par une pré-polymérisation, puis on enroule immédiatement le stratifil sur un manchon.

3. Procédé suivant la revendication 2, caractérisé en ce que le stratifil imprégné est maintenu pendant 10 à 100 secondes entre 180 et 280°C.

4. Procédé de production d'éléments façonnés en un polyamide renforcé par des fibres par une polymérisation alcaline d'une lactame en présence de fibres de renforcement, caractérisé en ce que l'on imprègne du stratifil sans fin d'une lactame fondue, qui contient un catalyseur fortement actif et un activateur, on polymérise la lactame par un chauffage à des températures ne dépassant pas 210°C, puis on enroule les boudins de demi-produit sur un manchon et on les porte à une température supérieure de 5 à 70°C au point de fusion du polyamide.

5. Procédé suivant l'une des revendications 1 et 4, caractérisé en ce que les fibres sont des fibres de verre, de carbone ou en un polyamide aromatique.

6. Procédé suivant l'une des revendications 1 et 4, caractérisé en ce que la lactame est de la caprolactame ou une capro-lactame alkyl-substituée, de l'hexano-lactame ou de la lactame caprylique.

7. Procédé suivant l'une des revendications 1 et 4, caractérisé en ce que le rapport volumique des fibres à la lactame est compris entre 30:70 et 70:30.

8. Procédé suivant l'une des revendications 1 et 4, caractérisé en ce que les catalyseurs fortement actifs sont choisis parmi les lactamates de métaux alcalins, les composés de Grignard et les hydrures de métaux alcalins.

9. Procédé suivant l'une des revendications 1 et 4, caractérisé en ce que les activateurs sont choisis parmi les isocyanates éventuellement bloqués, les carbodiimides, les acyl-lactames, les bis-acyl-lactames et les carbonyl-lactames.

10. Procédé suivant l'une des revendications 1 à 4, caractérisé en ce que, pendant l'opération d'imprégnation, on maintient la lactame à une température comprise entre 70 et 140°C.

11. Procédé suivant l'une des revendications 1 et 4, caractérisé en ce que la lactame est polymérisée entre 160 et 200°C, la durée de la polymérisation ne dépassant pas dix minutes.

**Claims**

1. A process for the production of a molding from fiber-reinforced nylon by alkaline lactam polymerization in the presence of reinforcing fibers, wherein filament rovings are wound round a rod, the rovings being impregnated, either before or after winding, with a lactam melt containing a highly reactive catalyst and an activator, and the lactam is polymerized by heating at not more than 210°C.

2. A process as claimed in claim 1, wherein filament rovings are impregnated with a lactam melt, the viscosity of the lactam is increased by partial polymerization and, directly thereafter, the roving is wound round a rod.

3. A process as claimed in claim 2, wherein the impregnated roving is treated for from 10 to 100 seconds at from 180 to 280°C.

4. A process for the production of a molding from fiber-reinforced nylon by alkaline lactam polymerization in the presence of reinforcing fibers, wherein filament rovings are impregnated with a lactam melt containing a highly reactive catalyst and an activator, the lactam is polymerized by heating at not more than 210°C, and the strand-like semi-manufactures are wound round a rod and heated to a temperature which is from 5 to 70°C higher than the melting point of the nylon.

5. A process as claimed in claims 1 and 4, wherein the filaments consist of glass, carbon or an aromatic nylon.

6. A process as claimed in claims 1 and 4, wherein the lactam is caprolactam, alkyl-substituted caprolactam, capryllactam or laurolactam.

7. A process as claimed in claims 1 and 4, wherein the volumetric ratio of filaments to lactam is from 30:70 to 70:30.

8. A process as claimed in claims 1 and 4, wherein the highly reactive catalyst employed is an alkali metal lactamate, a Grignard compound or an alkali metal hydride.

9. A process as claimed in claims 1 and 4, wherein the activator employed is an isocyanate, a blocked isocyanate, a carbodiimide, an acyllactam, a bisacyllactam or a carbonyllactam.

10. A process as claimed in claims 1 and 4, wherein the lactam is at 70—140°C during the impregnation operation.

11. A process as claimed in claims 1 and 4, wherein the lactam is polymerized at from 160 to 200°C for not more than 10 minutes.